# EUROPEAN PATENT APPLICATION

(11) **EP 4 438 797 A1**
(43) Date of publication of application: **02.10.2024**
(21) Application number: 23784847.8
(22) Date of filing: 09.02.2023
(51) Int. Cl.: D06F 58/20, D06F 58/38, B01D 53/26

(54) **DEHUMIDIFYING KIT, DRYING APPARATUS COMPRISING SAME, AND METHOD FOR OPERATING DEHUMIDIFYING MODE OF DRYING APPARATUS**

(30) Priority: 05.04.2022 KR 20220042436
(71) Applicant: LG Electronics Inc., Yeongdeungpo-gu Seoul 07336 (KR)
(72) Inventor: BAE, Jin Woo, Seoul 08592 (KR); LEE, Jong Min, Seoul 08592 (KR); NOH, Hyun Woo, Seoul 08592 (KR); CHO, Hong Jun, Seoul 08592 (KR); HWANG, Yang Guk, Seoul 08592 (KR)
(74) Representative: Vossius & Partner Patentanwälte Rechtsanwälte mbB
(86) International application number: PCT/KR2023/001937
(87) International publication number: WO 2023/195619

(57) **Abstract**

Provided is a dehumidifying kit installed on a drying apparatus that operates an inside drying function when a door is closed and an outside dehumidifying function when the door is open through a suction port and an exhaust port that are provided inside, wherein an opening part of the drying apparatus is partitioned as an opening inlet and an opening outlet, an inner space of the drying apparatus is partitioned as an external air suction flow path from the opening inlet to the suction port and a dry air discharge flow path from the exhaust port to the opening outlet.

## Description

### Technical Field

The present disclosure relates to a dehumidifying kit, a drying apparatus including the same and a method of operating a dehumidifying mode of the drying apparatus.

### Background Art

The drying apparatus or a clothes drying apparatus is an apparatus that blows high-temperature dry wind on the materials or clothing to be dried inside a drum to dry them. Research is being conducted to dehumidify the air outside the drying apparatus by using the characteristics of the drying apparatus that generates high-temperature dry wind.

In order for the drying apparatus, which is driven by a closed circulation flow path to dry clothes, to implement an external air dehumidification function, the flow path of the drying apparatus should be open to the outside. If the drying apparatus is equipped with a separate service hole or flow path switching damper, the external air dehumidification function can be used by switching the flow path of the drying apparatus, but otherwise, the dehumidifying function can be used by opening the door of the drying apparatus.

When using the external air dehumidification function by opening the door of the drying apparatus, since the suction port and the exhaust port are both present inside the drying apparatus, there may be a problem that instead of moist external air, some of the dry air discharged from the exhaust port is sucked back into the suction port, lowering the external air dehumidification performance.

With respect thereto, Japanese laid-open patent publication No. 2007-068870 discloses a clothes drying apparatus that takes moist external air by opening door of the drying apparatus through a clothing input port, and dehumidifies the external air by releasing dry air again through the same clothing input port. However, it does not solve the problem on the external air dehumidification performance.

Japanese Patent No. 4862731 discloses a drying apparatus that is equipped with a means for switching the waste flow path inside the drying apparatus when dehumidifying external air so that dry air can be released through an exhaust port separately provided in the drying apparatus. However, this cannot be applied to a drying apparatus without such exhaust port and flow path switching means.

Korean laid-open patent publication No. 2005-0051934 and Korean laid-open patent publication No. 2006-013075 disclose means that can supply or discharge external air to a drying apparatus flow path, but the means is not intended to dehumidify the external air but to increase drying efficiency inside the drying apparatus.

Korean laid-open patent publication No. 2019-0034779 and Korean laid-open patent publication No. 2020-7002248 disclose a separate apparatus near an opening part where materials to be dried of the clothes drying apparatus are input, but it has a purpose other than dehumidifying the external air.

### Detailed Description of the Invention

### Technical Goals

Example embodiments of the present disclosure are to provide a dehumidifying kit that is installed on a drying apparatus, which prevents dry air discharged through the clothing inlet from being sucked into the suction port of the drying apparatus again, and prevents the dry air from mixing with the moist external air sucked through the clothing inlet in order to increase the external drying efficiency of the drying apparatus, and to provide a drying apparatus including the dehumidifying kit and a method of performing a dehumidifying mode of the drying apparatus.

Example embodiments of the present disclosure are to provide a dehumidifying kit that prevents current leakage when operating an external air dehumidifying mode when a door of the drying apparatus is opened by covering the electrodes or a sensor for identifying dryness inside the drying apparatus.

Example embodiments of the present disclosure are to provide a dehumidifying kit that controls dehumidifying mode operation depending on whether the dehumidifying kit is installed by including a means that identifies whether the dehumidifying kit is installed using electrodes or a sensor for dryness inside the drying apparatus.

The technical goals to be achieved in the present disclosure are not limited to the technical goals described above, and other technical goals not mentioned herein will be clearly understood by those skilled in the art from the following description.

### Technical solutions

According to an aspect, there is provided a dehumidifying kit installed on a drying apparatus that operates an inside drying function when a door is closed and an outside dehumidifying function when the door is open through a suction port and an exhaust port that are provided inside, wherein an opening part of the drying apparatus is partitioned as an opening inlet and an opening outlet, an inner space of the drying apparatus is partitioned as an external air suction flow path from the opening inlet to the suction port and a dry air discharge flow path from the exhaust port to the opening outlet.

Further, partition of the opening part and partition of the inner space of the drying apparatus may be implemented by a partition wall, wherein the partition wall may include a guiding surface that faces a direction of the suction port of the drying apparatus and external air sucked into the opening inlet is guided by the guiding surface and sucked into the suction port.

Further, the partition wall may include a main panel, a first supporting panel that is connected to one side end of the main panel through a first supporting panel connecting part and supports the main panel, a second supporting panel that faces the first supporting panel and is connected to an opposite side end of the main panel through a second supporting panel connecting part to support the main panel, and a rear panel that is connected to a rear end of the main panel through a rear panel connecting part and supports the main panel, wherein at least one of the main panel, the first supporting panel, the second supporting panel and the rear panel forms the guiding surface.

Further, the dehumidifying kit may further include a fixing part that fixes the dehumidifying kit to the drying apparatus.

Further, the fixing part that fixes the dehumidifying kit to the drying apparatus may be included, wherein the fixing part may include a first supporting panel fixing part that is provided on the first supporting panel and fixes the first supporting panel to one side of the suction port when the dehumidifying kit is installed, a second supporting panel fixing part that is provided on the second supporting panel and fixes the second supporting panel to an opposite side of the suction port when the dehumidifying kit is installed, and a rear panel fixing part that is provided on the rear panel and fixes the rear panel inside the opening part when the dehumidifying kit is installed.

Further, the first supporting panel fixing part may include a hook that fixes the first supporting panel to the one side of the suction port when the dehumidifying kit is installed, and the second supporting panel fixing part may include a hook that fixes the second supporting panel to the opposite side of the suction port when the dehumidifying kit is installed, and the rear panel fixing part may include a hook that fixes the rear panel inside the opening part when the dehumidifying kit is installed.

Further, the first supporting panel connecting part may include a first lateral hinge, the second supporting panel connecting part may include a second lateral hinge, the rear panel connecting part may include a rear hinge, and when the dehumidifying kit is stored, the first supporting panel may be rotated based on the first lateral hinge, the second supporting panel may be rotated based on the second lateral hinge, and the rear panel may be rotated based on the rear hinge in order for the first supporting panel, the second supporting panel and the rear panel to be folded toward the main panel.

Further, the first supporting panel may include a first sealing tongue that is protruded from one side of the first supporting panel near the first supporting panel connecting part in a direction perpendicular to a surface of the first supporting panel, the second supporting panel may include a second sealing tongue that is protruded from one side of the second supporting panel near the second supporting panel connecting part in a direction perpendicular to a surface of the second supporting panel, the main panel may include a rear sealing tongue that is protruded from one side of the main panel near the rear panel connecting part in a direction perpendicular to a surface of the main panel and has an end that is bent outward parallel to the rear panel, the main panel may include a first sealing groove that is provided near the first supporting panel connecting part and an end of the first sealing tongue is inserted to seal the first supporting panel connecting part and a second sealing groove that is provided near the second supporting panel connecting part and an end of the second sealing tongue is inserted to seal the second supporting panel connecting part, and the rear panel may include a rear sealing groove in which an end of the rear sealing tongue is inserted near the rear panel connecting part to seal the rear panel connecting part.

Further, the first supporting panel may include a first tongue for assembly that is protruded parallel to the surface of the first supporting panel at a rear end of the first supporting panel, the second supporting panel may include a second tongue for assembly that is protruded parallel to the surface of the second supporting panel at a rear end of the second supporting panel, and the rear panel may include a first groove for assembly into which the first tongue for assembly is inserted at one side end of the rear panel and a second groove for assembly in which the second tongue for assembly is inserted at an opposite side end of the rear panel.

Further, the partition of the opening part and the partition of the inner space of the drying apparatus may be implemented by the partition wall, and the partition wall may cover one or more electrodes provided in the drying apparatus, when the dehumidifying kit is installed.

Further, the dehumidifying kit may further include a current carrying part that connects all of the plurality of electrodes provided in the drying apparatus and electrically connects the plurality of electrodes, when the dehumidifying kit is installed.

Further, the partition of the opening part and the partition of the inner space of the drying apparatus may be implemented by the partition wall, and the current carrying part may be removably assembled on the partition wall.

According to another aspect, there is provided a drying apparatus that is capable of performing an inside drying function when a door is closed and an outside dehumidifying function when the door is open, the apparatus including a drum that forms an inner space that accommodates materials to be dried, a cabinet that mounts the drum and forms an opening part through which the materials to be dried are introduced into the drum, a door that opens and closes the opening part, a suction port that is provided inside the drying apparatus to suck humid air, an exhaust port that is provided inside the drying apparatus to discharge dry air, and a dehumidifying kit, wherein the dehumidifying kit, in a state that the door is open, the opening part is partitioned into an opening inlet and an opening outlet, and the inner space of the drying apparatus is partitioned into an external air suction flow path from the opening inlet to the suction port and a dry air discharge flow path from the exhaust port to the opening outlet.

According to an example embodiment, the drying apparatus may further include an evaporator and a condenser disposed on a drying path formed from the suction port to the exhaust port, and a fan forming airflow in the drying path.

According to another aspect, there is provided a method of operating a dehumidifying mode of the drying apparatus, the method including identifying a dehumidification start command, when the command is identified, identifying whether a dehumidifying kit is installed through a current carrying part provided in the dehumidifying kit, and when the dehumidifying kit is installed as a result of identification, performing a dehumidification operation, and when the dehumidifying kit is not installed as a result of identification, pausing the dehumidification operation and identifying the dehumidification start command.

Details of other example embodiments are included in the detailed description and drawings.

### Effects of the Invention

According to the example embodiments, by installing the dehumidifying kit according to the example embodiments on a drying apparatus without a separate opening inlet or an external air outlet, external air may be efficiently dehumidified through the opening part.

According to the example embodiments, it is possible to know whether the dehumidifying kit according to the example embodiments is installed by using a current carrying part or a sensor identifying dryness of the drying apparatus, and thus the dehumidifying mode operation of the drying apparatus may be controlled.

The effects to be obtained in the present disclosure are not limited to the aforementioned effects, and other effects not mentioned herein will be clearly understood by those skilled in the art from the following description.

### Brief Description of Drawings

FIG. 1 illustrates a perspective view of a drying apparatus equipped with a dehumidifying kit according to an example embodiment.
FIG. 2 illustrates a cross-sectional view of a drying apparatus equipped with a dehumidifying kit according to an example embodiment.
FIG. 3 shows a cross-sectional view of a dehumidifying kit and a drying apparatus near the installation location of the dehumidifying kit according to an example embodiment.
FIG. 4 illustrates a perspective view of a dehumidifying kit according to an example embodiment.
FIG. 5 illustrates a perspective view of a dehumidifying kit and a drying apparatus near the installation position of the dehumidifying kit according to an example embodiment.
FIG. 6 illustrates a perspective view of a dehumidifying kit that is folded according to an example embodiment.
FIG. 7 illustrates a side view of a first supporting panel connecting part of a dehumidifying kit according to an example embodiment.
FIG. 8 illustrates a side view of a rear panel connecting part of a dehumidifying kit according to an example embodiment.
FIG. 9 illustrates an assembly structure of a first supporting panel and a rear panel of a dehumidifying kit according to an example embodiment.
FIG. 10 illustrates the inside of an opening part of a drying apparatus according to an example embodiment.
FIG. 11 illustrates the inside of an opening part of another drying apparatus according to an example embodiment.
FIG. 12 illustrates a perspective view of another dehumidifying kit according to an example embodiment.
FIG. 13 illustrates a perspective view of the dehumidifying kit illustrated in FIG. 12 installed on a drying apparatus.
FIG. 14 illustrates an example of a method of operating a dehumidifying mode of a drying apparatus equipped with a dehumidifying kit according to an example embodiment.
FIG. 15 shows a psychrometric chart showing the performance of a drying apparatus equipped with a dehumidifying kit according to an example embodiment and the performance of the drying apparatus without the dehumidifying kit.

### Mode for Carrying Out the Invention

Example embodiments of the present disclosure are illustrative rather than limiting the present disclosure and those skilled in the art may design many alternative example embodiments without departing from the scope of the disclosure as defined by the appended claims. Terms used in example embodiments are general terms that are currently widely used while their respective functions in the present disclosure are taken into consideration. However, the terms may be changed depending on intention of one of ordinary skilled in the art, legal precedents, emergence of new technologies, and the like. Further, in certain cases, there may be terms arbitrarily selected by the applicant, and in this case, the meaning of the term will be described in detail in the corresponding description. Accordingly, the terms used herein are not to be construed simply as its designation but based on the meaning of the term and the overall context of the present disclosure.

As used herein, the singular expressions include both the singular and the plural, unless the context clearly states otherwise.

Throughout the present disclosure, when a part is said to "include" certain elements or certain operations, this does not mean that the part must include all of the elements or operations, unless specifically stated to the contrary, neither does this exclude the inclusion of elements or operations other than those listed in the claims or the entire present disclosure. This just indicate that the part can further include the elements or the operations.

Further, terms containing ordinal numbers such as first, second, etc. used in the present disclosure can be used to describe various elements, but the elements should not be limited by the terms containing the ordinal numbers. The terms are used in context only to distinguish one element from another element in a part of the present disclosure. For example, a first element may be referred to as a second element in another part of the present disclosure without departing from the scope of the present disclosure, and conversely, the second element may also be referred to as a first element in another part of the present disclosure.

In the present disclosure, terms such as "mechanism," "element," "means" and "configuration" may be used broadly and are not limited to mechanical and physical elements. The terms may include the meaning of a series of routines of software in association with a processor or the like.

In the present disclosure (especially in the claims), the use of term "the" and similar referential terms may refer to both the singular and the plural. Further, when a range is stated, the range includes individual values within the range (unless there is a statement to the contrary), and it is the same as when each individual value constituting the range is described in the detailed description. Finally, unless there is an explicit order or description to the contrary regarding operations of a method, the operations may be rearranged and performed in an appropriate order, and the present disclosure is not limited to the order of description of the operations. The use of any example embodiments or exemplary terms (for example, etc.) is merely for elaborating the technical idea, and unless limited by the claims, the scope is not limited by the example embodiments or exemplary terms. A person skilled in the art may constitute new example embodiments that fall within the scope of the patent claims or their equivalents by adding various modifications, combinations and change according to the design conditions and factors in the example embodiments disclosed herein.

Hereinafter, example embodiments of the present disclosure will be described with reference to the drawings. For the sake of brevity of the example embodiments and drawings, various functional elements that are not relevant to understanding the present disclosure are omitted from the drawings. However, those skilled in the art will readily appreciate that various additional elements may be included as part of specific example embodiments of the present disclosure to enable additional functionality not specifically described in the present disclosure.

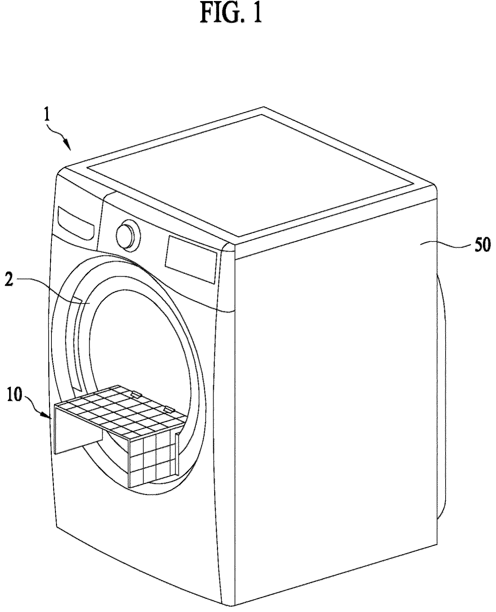

FIGS. 1 to 5 illustrate an example embodiment of a dehumidifying kit 10 and a drying apparatus 1 including the dehumidifying kit 10 according to the present disclosure.

The dehumidifying kit 10 according to the present disclosure may be installed on the drying apparatus 1 which performs an inside drying function when the door is closed and performs an outside dehumidifying function when the door is opened, through a suction port 3 and an exhaust port 4 exposed to the inner space of the drying apparatus 1, or may be included in the drying apparatus 1.

In an example embodiment, the drying apparatus 1 may be provided with an inner tank or a drum 9 that is rotatable. The drum 9 may form an inner space that accommodates materials to be dried. The drying apparatus 1 may include a cabinet 50 on which the drum 9 is mounted and which forms an opening part 2 through which the materials to be dried are introduced into the drum 9. The cabinet 50 of the drying apparatus 1 may be equipped with a user interface such as buttons, dials, or a touch screen that allows the user to operate the drying apparatus 1. In an example embodiment, the drying apparatus 1 may include a door that opens and closes the opening part 2.

In an example embodiment, the drying apparatus 1 may be equipped with the suction port 3 provided inside the drying apparatus 1 to suck humid air and the exhaust port 4 provided inside the drying apparatus 1 to discharge dry air. For example, the drying apparatus 1 may have neither a separate suction port nor a separate exhaust port exposed to the outside, and the door of the drying apparatus 1 should be opened to dehumidify the external air using the suction port 3 and the exhaust port 4 inside the drying apparatus. However, the structure of the drying apparatus 1 is not limited thereto, and the dehumidifying kit 10 may also be installed in a drying apparatus that has a separate suction port or a separate exhaust port exposed to the outside.

In an example embodiment, the suction port 3 and the exhaust port 4 of the drying apparatus 1 are exposed inside the drying apparatus 1 to suck in air from the drum 9 and discharge air to the drum 9. However, in this case, if the door is opened, the drum 9 is merely a passage for the air that the suction port 3 and the exhaust port 4 inhale and exhaust, and substantially, the suction port 3 may suck air outside the cabinet 50 through the inner space of the drum 9, and the exhaust port 4 may discharge air to the outside of the cabinet 50 through the inner space of the drum 9.

In an example embodiment, the drying apparatus 1 may be a clothes drying apparatus, and the materials put into the opening part 2 may be clothing to be dried. In this case, the drying apparatus 1 may dry the clothes when the clothes are put in through the opening part 2 with the door closed. The drying apparatus 1 may dry external air by operating in external air dehumidifying mode with the door open and no clothing put in. This has the advantage of being able to dehumidify external air using only the drying apparatus 1 without having a separate dehumidifier.

In an example embodiment, the dehumidifying kit 10 includes a partition wall 11 that guides the airflow.

The dehumidifying kit 10 or the partition wall 11 may partition the opening part 2 of the drying apparatus 1 into an opening inlet 210 and an opening outlet 220, and partition the inner space of the drying apparatus into an external air suction flow path 211 from the opening inlet 210 to the suction port 3 and a dry air discharge flow path 221 from the exhaust port 4 to the opening outlet 220. In other words, the partition of the opening part 2 and the partition of the inner space of the drying apparatus 1 may be performed by the partition wall 11. For example, the dehumidifying kit 10 may be installed around the opening part 2 of the drying apparatus 1 to partition the opening part 2 as described above. This has the effect of allowing the intake of external air and the exhaust of dry air to be carried out efficiently at the same time through the opening part 2. In other words, when the drying apparatus 1 is operated in external air drying mode using the dehumidifying kit 10, moist external air may flow from the outside of the drying apparatus 1 into the opening inlet 210 of the opening part 2 partitioned by the dehumidifying kit 10 and then may be sucked into a drying path 32 through the external air suction flow path 211 and the suction port 3, and dry air may be discharged from the exhaust port 4 and go through the dry air discharge flow path 221, and then be discharged to the outside of the drying apparatus 1 through the opening outlet 220 of the opening part 2 partitioned by the dehumidifying kit 10. A filter 31 may be installed in the suction port 3 to prevent the inflow of external foreign substances.

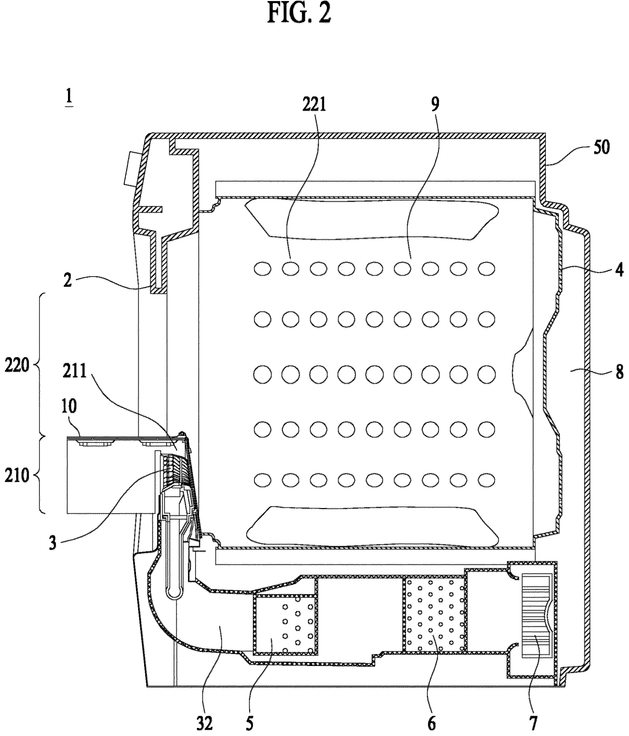

In an example embodiment, the external air sucked into the drying path 32 through the suction port 3 may pass through an evaporator 5 and at the same time may come into contact with the low-temperature refrigerant of the evaporator 5. At this time, as the temperature of the moist external air decreases, the moisture contained in the external air may condense. The air that passes through the evaporator 5 passes through a condenser 6 again and may come into contact with high-temperature refrigerant. Here, the temperature of air in contact with the high-temperature refrigerant may increase, forming high-temperature dry air. High-temperature dry air may pass through a rear space 8 of the drying apparatus 1 and then be discharged through the exhaust port 4. Through the process, the drying apparatus 1 may convert moist external air into high-temperature dry air and discharge the air to the outside of the drying apparatus 1, and may dehumidify the external air. A fan 7 may be located within the drying path 32 and may be operated to form airflow within the drying path 32 so that the external air passes through the drying path 32 and dehumidifies through the above series of processes. The fan 7 illustrated in FIG. 2 is installed behind the evaporator 5 and the condenser 6, but the location of the fan 7 is not limited thereto. In an example embodiment, the drying apparatus 1 may also include a heater instead of the condenser 6. This has the advantage of being able to raise the temperature of the air more quickly.

The direction that the suction port 3 faces may be different from the direction that the opening part 2 or the opening inlet 210 faces. Therefore, the dehumidifying kit 10 or the partition wall 11 may have a shape by which the flow direction of external air flowing into the opening part 2 or the opening inlet 210 is toward the suction port 3. Specifically, the dehumidifying kit 10 or the partition wall 11 may include a guiding surface 19 facing the direction of the suction port 3 of the drying apparatus 1, and the external air sucked into the opening inlet 210 may be guided by the guiding surface 19 and sucked into the suction port 3. This has the effect of allowing external air flowing into the opening part 2 or the opening inlet 210 to move more easily toward the suction port 3.

The guiding surface 19 may also partition the opening part 2 into the opening inlet 210 and the opening outlet 220. Since the suction port 3 is located near the opening part 2, the guiding surface 19 of the partition wall 11 illustrated in FIGS. 1 to 5 extends to the opening part 2 to partition the opening part 2 into the opening inlet 210 and the opening outlet 220. However, the shape of the guiding surface 19 according to the present disclosure is not limited thereto. For example, a separate partitioning wall may partition the opening part 2 into the opening inlet 210 and the opening outlet 220, and the partitioning wall and the guiding surface 19 may be composed of separate panels.

In an example embodiment, the partitioning wall or the guiding surface 19 may be provided horizontally to separate the air sucked into the drying apparatus 1 from the air discharged from the top and bottom. Based on that the opening part 2 is oriented horizontally, the partitioning wall or the guiding surface 19 may also be disposed in a direction parallel to the bottom surface of the drying apparatus 1 for efficient intake and discharge of the air. However, in order to minimize sudden changes in direction of the air, the partitioning wall or the guiding surface 19 may form a predetermined slope (not illustrated). For example, the partitioning wall or the guiding surface 19 may be configured such that its outer end is higher than its inner end and the sucked air naturally flows to the suction port 3 located further below.

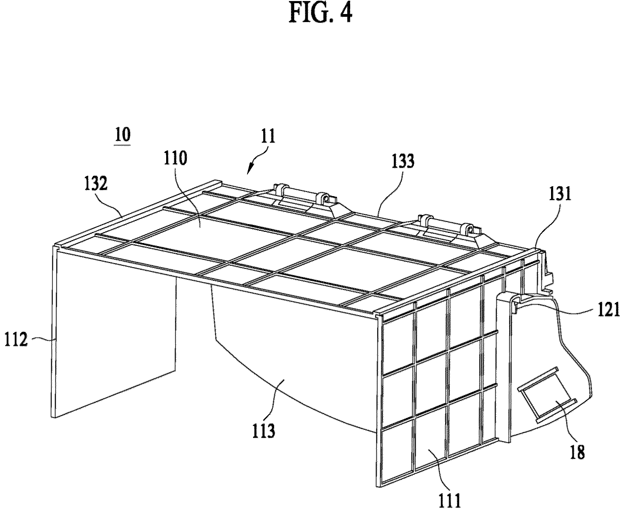

In an example embodiment, the partition wall 11 may include a main panel 110, a first supporting panel 111 that is connected to one side end of the main panel 110 through the first supporting panel connecting part 131 and supports the main panel 110, a second supporting panel 112 that faces the first supporting panel 111 and is connected to the opposite side end of the main panel 110 through the second supporting panel connecting part 132 to support the main panel 110, and a rear panel 113 that is connected to the rear end of the main panel 110 through the rear panel connecting part 133 and supports the main panel 110.. FIG. 4 illustrates the structure. The partition wall 11 illustrated in FIG. 4 includes the main panel 110, the first supporting panel 111, the second supporting panel 112 and the rear panel 113, but the shape of the partition wall 11 is not limited thereto, and the partition wall 11 of another shape that performs the same role as the partition wall 11 is also included in the scope of the present disclosure. For example, the main panel 110, the first supporting panel 111, the second supporting panel 112 and the rear panel 113 may be manufactured as one piece, or may be at least two of the panels 110, 111, 112 and 113 may be manufactured as one piece. For another example, the first supporting panel connecting part 131, the second supporting panel connecting part 132 and the rear panel connecting part 133 may also be boundaries or areas that partition a panel manufactured in one piece around the connection part. The panels 110, 111, 112 and 113 illustrated in FIG. 4 have the shape of a flat plate, but it is apparent to those skilled in the art that the panels may be in the form of panels with curved surfaces as needed. For example, a portion of the main panel 110 and a portion of the rear panel 113 around the rear panel connecting part 133 may have curved shapes that smoothly connect to each other, unlike FIG. 4. This has the advantage of allowing external air induced by the main panel 110 and the rear panel 113 to flow into the suction port 3 more smoothly.

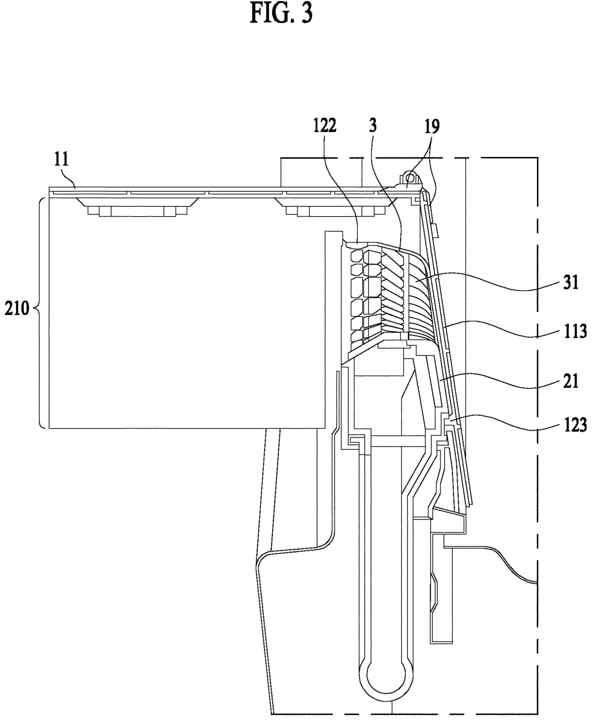

In an example embodiment, at least one of the main panel 110, the first supporting panel 111, the second supporting panel 112 and the rear panel 113 may form the guiding surface 19. Referring to the example embodiments of FIGS. 3 and 4, the main panel 110 or the rear panel 113 forms the guiding surface 19 and external air sucked into the opening inlet 210 is guided toward the suction port 3 by the guiding surface 19. Or, not illustrated but with respect to the partition wall 11, depending on the shape of the drying apparatus 1 and the opening part 2, the main panel 110, the first supporting panel 111, the second supporting panel 112 and the rear panel 113 altogether may form the guiding surface 19.

The main panel 110 preferably protrudes sufficiently outward from the drying apparatus 1. This is to prevent dry air discharged through the exhaust port 4 from flowing back into the suction port 3 by the main panel 110 clearly partitioning the opening part 2 into the opening inlet 210 and the opening outlet 220. Based thereon, the outer end of the main panel 110 may be provided to engage the boundary of the opening part 2, or may be provided to protrude further outward from the drying apparatus 1 than the boundary of the opening part 2.

In an example embodiment, the dehumidifying kit 10 may further include fixing parts 121, 122 and 123 that fix the dehumidifying kit 10 to the drying apparatus 1. The number and shape of the fixing parts 121, 122 and 123 are not limited those illustrated in FIGS. 1 to 5, and the number and shape may be of a known form capable of fixing the dehumidifying kit 10 to the drying apparatus 1, preferably in a known form that can be fixed around the opening part 2, the suction port 3 or the exhaust port 4 of the drying apparatus 1. Specifically, in an example embodiment, the fixing part may include a first supporting panel fixing part 121 that is provided on the first supporting panel 111 and fixes the first supporting panel 111 to one side of the suction port 3 when the dehumidifying kit 10 is installed, a second supporting panel fixing part 122 that is provided on the second supporting panel 112 and fixes the second supporting panel 112 to the opposite side of the suction port 3 when the dehumidifying kit 10 is installed, and a rear panel fixing part 123 that is provided on the rear panel 113 and fixes the rear panel 113 to an inside 21 of the opening part when the dehumidifying kit 10 is installed. For example, when the dehumidifying kit 10 is installed, the first supporting panel fixing part 121 may include a hook that fixes the first supporting panel 111 to one side of the suction port 3, when the dehumidifying kit 10 is installed, the second supporting panel fixing part 122 may include a hook that fixes the second supporting panel 112 to the opposite side of the suction port 3, and when the dehumidifying kit 10 is installed, the rear panel fixing part 123 may include a hook that fixes the rear panel 113 to the inside 21 of the opening part.

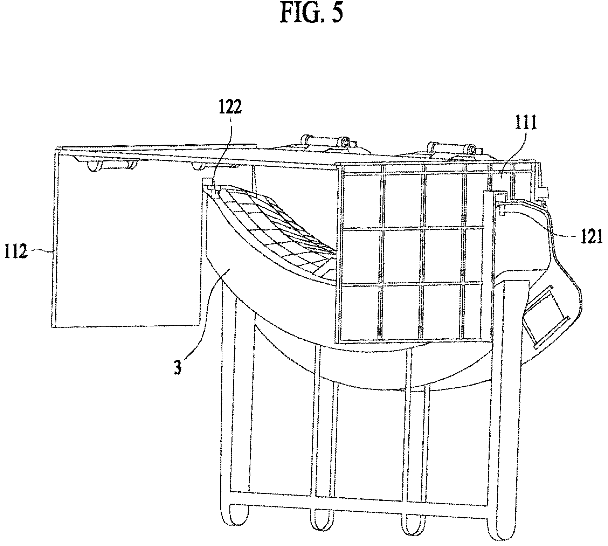

FIG. 3 illustrates a hook structure of the rear panel fixing part 123. The hook of the rear panel fixing part 123 may have a shape in which the rear panel 113 is bent inward. This bent shape may be configured to be caught on a protrusion inside 21 of the opening part so that the rear panel 113 is fixed inside 21 of the opening part and does not deviate from it. FIG. 5 illustrates a hook structure of each of the first supporting panel fixing part 121 and the second supporting panel fixing part 122. The hook of the first supporting panel fixing part 121 may have a structure that protrudes from one end of the first supporting panel 111. This protruding structure may be inserted and fixed on one side of the suction port 3. When the filter 31 is installed in the suction port 3, the hook of the first supporting panel fixing part 121 may be configured to be inserted into and fixed to a hole provided in the filter 31. This also applies to the second supporting panel fixing part 122.

The structure of the fixing parts 121, 122 and 123 may be different from the hook structure described previously, and the fixing parts 121, 122 and 123 may be any known structure that permanently or temporarily fixes the dehumidifying kit 10 to the drying apparatus 1. However, in order to dry the materials to be dried with the door closed after the external air-dehumidifying mode of the drying apparatus 1 is used, the fixing parts 121, 122 and 123 preferably have a structure that temporarily fixes the dehumidifying kit 10 to the drying apparatus 1.

In some cases, the fixing part may only perform the function of mounting the dehumidifying kit 10 to the drying apparatus 1, and in this case, the shape of the dehumidifying kit 10 itself may function as a fixing part. As illustrated in FIG. 3, if the dehumidifying kit 10 consists of a "c" shaped structure with a hole at the bottom based on one side, the dehumidifying kit 10 may be fixed by placing the dehumidifying kit 10 or the partition wall 11 on the drying apparatus 1 by gravity without a separate hook structure. In order to be fixed to the drying apparatus 1 in this manner, the dehumidifying kit 10 or the partition wall 11 preferably has a shape that engages with a portion of the shape of the drying apparatus 1.

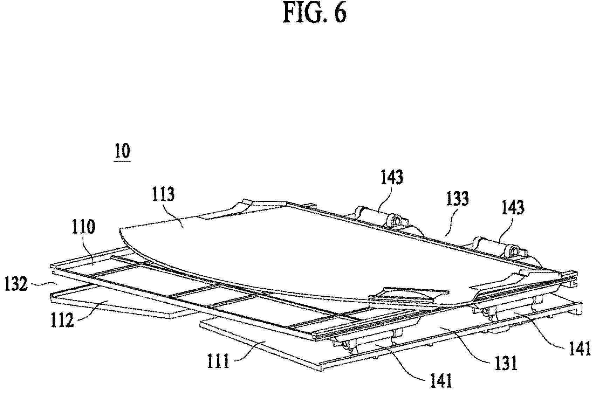

FIG. 6 illustrates an example of the dehumidifying kit 10 according to the present disclosure. In an example embodiment, the dehumidifying kit 10 may be provided in a foldable form. This has the advantage of allowing the dehumidifying kit 10 to be stored more efficiently. Specifically, the first supporting panel connecting part 131 may include first lateral hinges 141, the second supporting panel connecting part 132 may include second lateral hinges, and the rear panel connecting part 133 may include rear hinges 143. When the dehumidifying kit 10 is stored, the first supporting panel 111 may be rotated based on the first lateral hinges 141, the second supporting panel 112 may be rotated based on the second lateral hinges and the rear panel 113 may be rotated based on the rear hinges 143 to be folded toward the main panel 110. The structures of the first lateral hinges 141, the second lateral hinges and the rear hinges 143 are not limited to the shapes illustrated in FIG. 6. The first lateral hinges 141 and the second lateral hinges illustrated in FIG. 6 have a shape such that the first supporting panel 111 and the second supporting panel 112 are folded toward the bottom of the main panel 110, but in contrast, the first lateral hinges 141 and the second lateral hinges may have a shape such that the first supporting panel 111 and the second supporting panel 112 are folded toward the upper surface of the main panel 110. Likewise, the rear hinges 143 illustrated in FIG. 6 have a shape that allows the rear panel 113 to be folded toward the upper surface of the main panel 110, but in contrast, the rear panel 113 may have a shape that folds toward the bottom of the main panel 110.

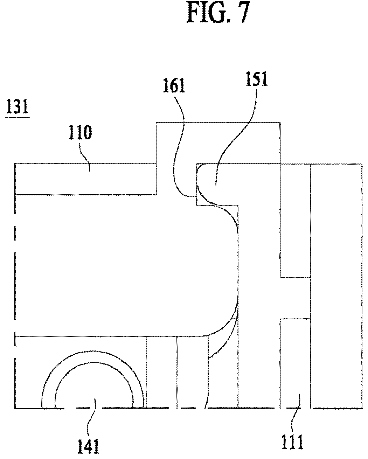

FIG. 7 illustrates an example embodiment of the first supporting panel connecting part 131 according to the present disclosure. In an example embodiment, the first supporting panel 111 may include a first sealing tongue 151 that protrudes from one side of the first supporting panel 111 near the first supporting panel connecting part 131 in a direction perpendicular to a surface of the first supporting panel. Here, the min panel 110 may include a first sealing groove 161 that is provided near the first supporting panel connecting part 131 and an end of the first sealing tongue 151 is inserted and the first supporting panel connecting part 131 is sealed. This has the advantage of preventing external air sucked into the opening inlet 210 from leaking through the gap in the first supporting panel connecting part 131 between the main panel 110 and the first supporting panel 111. When the first supporting panel 111 rotates based on the first lateral hinges 141 and unfolds from the main panel 110 and the first sealing tongue 151 is inserted into the first sealing groove 161, to ensure smoother insertion, the end of the first sealing tongue 151 may have a blunt shape.

The locations and shapes of the first sealing tongue 151 and the first sealing groove 161 may be different from those illustrated in FIG. 7. For example, unlike what is illustrated in FIG. 7, the first sealing tongue 151 may be included in the main panel 110, and the first sealing groove 161 may be included in the first supporting panel 111. Even in cases like this, the first sealing tongue 151 may be inserted into the first sealing groove 161 in order for the external air sucked through the opening inlet 210 not to be leaked through the gap in the first supporting panel connecting part 131 between the main panel 110 and the first supporting panel 111.

Similar to the above-described first sealing tongue 151, the first sealing groove 161 and nearby structures, the second supporting panel 112 may include a second sealing tongue that is protruded from one side of the second supporting panel 112 near the second supporting panel connecting part 132 in a direction perpendicular to the second supporting panel side. Specifically, the structures of the second sealing tongue, the second sealing groove and their vicinity may be symmetrical to the structures of the first sealing tongue 151, the first sealing groove 161 and their vicinity described above.

Specifically, the main panel 110 may include a second sealing groove that is provided near the second supporting panel connecting part 132, the end of the second sealing tongue is inserted and the second supporting panel connecting part 132 is sealed. This has the advantage of preventing external air sucked through the opening inlet 210 from leaking through the gap in the second supporting panel connecting part 132 between the main panel 110 and the second supporting panel 112. When the second supporting panel 112 rotates based on the second lateral hinges and unfolds from the main panel 110 and the second sealing tongue is inserted into a second sealing groove 162, in order to ensure smoother insertion, the end of the second sealing tongue may have a blunt shape.

The locations and shapes of the second sealing tongue and the second sealing groove may be different from those described above. For example, unlike above description, the second sealing tongue may be included in the main panel 110, and the second sealing groove may be included in the second supporting panel 112. Even in this case, it is possible to prevent external air sucked into the opening inlet 210 by the second sealing tongue being inserted into the second sealing groove from leaking through the gap in the second supporting panel connecting part 132 between the main panel 110 and the second supporting panel 112.

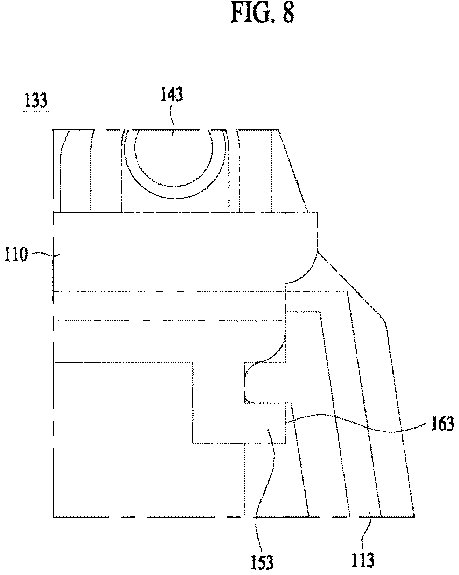

FIG. 8 illustrates the rear panel connecting part 133 according to an example embodiment of the present disclosure. In the example embodiment, the main panel 110 may include a rear sealing tongue 153 that protrudes from one side of the main panel 110 near the rear panel connecting part 133 in a direction perpendicular to the surface of the main panel 110 and has an end bent outward parallel to the rear panel 113. Here, the rear panel 113 may include a rear sealing groove 163 where an end of the rear sealing tongue 153 is inserted near the rear panel connecting part 133 to seal the rear panel connecting part 133. This has the advantage that the external air sucked through the opening inlet 210 is prevented from leaking through the gap in the rear panel connecting part 133 between the main panel 110 and the rear panel 113. When the rear panel 113 rotates based on the rear hinges 143 and unfolds from the main panel 110 and the rear sealing tongue 153 is inserted into the rear sealing groove 163, for the smoother insertion, the end of the rear sealing tongue 153 may have a blunt shape.

The locations and shapes of the rear sealing tongue 153 and the rear sealing groove 163 may be different from those shown in FIG. 7. For example, unlike what is illustrated in FIG. 7, the rear sealing tongue 153 may be included in the rear panel 113, and the rear sealing groove 163 may be included in the main panel 110. Even in this case, it is possible to prevent external air sucked into the opening inlet 210 by the rear sealing tongue 153 being inserted into the rear sealing groove 163 from leaking through the gap in the rear panel connecting part 133 between the main panel 110 and the rear panel 113.

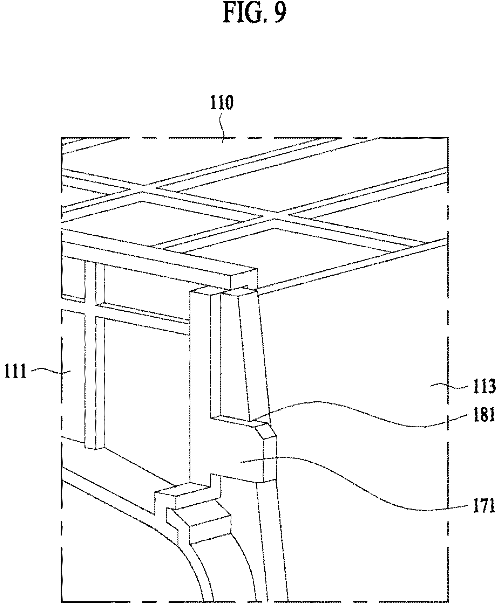

FIG. 9 illustrates the assembly structure of the first supporting panel 111 and the rear panel 113 according to an example embodiment. In the example embodiment, the first supporting panel 111 may include a first tongue 171 for assembly that protrudes parallel to the surface of the first supporting panel at the rear end of the first supporting panel 111, and the rear panel 113 may include a first groove 181 for assembly into which the first tongue 171 for assembly is inserted at one side end of the rear panel 113. This has the advantage that when the first supporting panel 111 and the rear panel 113 of the folding dehumidifying kit are unfolded, the first tongue 171 for assembly is inserted into the first groove 181 for assembly so that the rear panel 113 may be fixed to the first supporting panel 111.

The locations and shapes of the first tongue 171 for assembly and the first groove 181 for assembly may be different from the locations and shapes described above. For example, unlike the above descriptions, the first tongue 171 for assembly may be included in the rear panel 113, and the first groove 181 for assembly may be included in the first supporting panel 111. Even in this case, the first tongue 171 for assembly is inserted into the first groove 181 for assembly so that the rear panel 113 may be fixed to the first supporting panel 111.

Similar to the above-described first tongue 171 for assembly, the first groove 181 for assembly and nearby structures, in an example embodiment, the second supporting panel 112 may include a second tongue for assembly that protrudes parallel to the surface of the second supporting panel at the rear end of the first supporting panel 111, and the rear panel 113 may include a second groove for assembly into which the second tongue for assembly is inserted at one side of the rear panel 113. This has the advantage that when the second supporting panel 112 and the rear panel 113 of the folding dehumidifying kit are unfolded, the second tongue for assembly is inserted into the second groove for assembly so that the rear panel 113 is fixed to the second supporting panel 112. Specifically, the second tongue for assembly, the second groove for assembly and nearby structures may be configured symmetrically to the above-described first tongue 171 for assembly, the first groove 181 for assembly and structures nearby.

Specifically, the locations and shapes of the second tongue for assembly and second groove for assembly may be different from those described above. For example, unlike the above description, the second tongue for assembly may be included in the rear panel 113, and the second groove for assembly may be included in the second supporting panel 112. Even in this case, the second tongue for assembly is inserted into the second groove for assembly so that the rear panel 113 may be fixed to the second supporting panel 112.

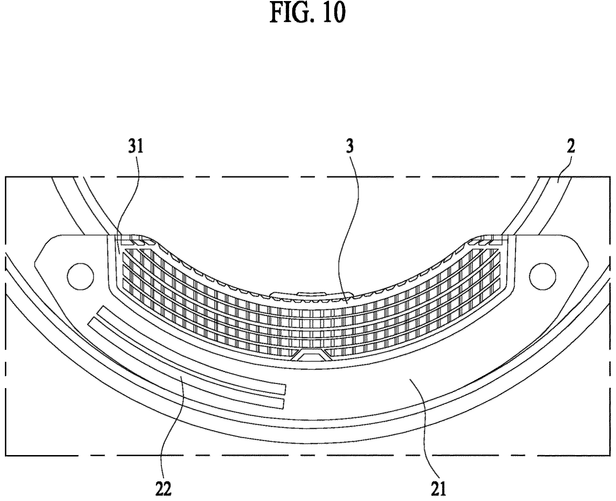

FIG. 10 illustrates the inside 21 of the opening part of the drying apparatus 1 according to an example embodiment of the present disclosure. FIG. 4 may be referred to together. The drying apparatus 1 rotates the drum 9 to change the position and direction of materials to be dried inside, so that the materials to be dried to dry evenly. When the drying apparatus 1 is operating in an external air-dehumidifying mode, there is no need to rotate the drum 9, and if the drum 9 is rotated, unnecessary power will be wasted. In an example embodiment, when the dehumidifying kit 10 is installed, the dehumidifying kit 10 may include a current carrying part 18 that contacts all of the plurality of electrodes 22 provided in the drying apparatus 1 and electrically connects the plurality of electrodes 22. Here, the plurality of electrodes 22 may be sensors for identifying dryness in the drying apparatus 1. When the plurality of electrodes 22 are electrically connected, the control module of the drying apparatus 1 may detect this and identify that the dehumidifying kit 10 is installed. Accordingly, when the dehumidifying kit 10 is installed, the control module of the drying apparatus 1 may prevent unnecessary waste of power by controlling the drying apparatus 1 not to rotate the drum 9.

In an example embodiment, when the dehumidifying kit 10 is installed, the partition wall 11 may cover one or more electrodes 22 provided in the drying apparatus 1. This has the advantage of preventing current leakage and promoting user safety by preventing the electrodes 22 from being exposed to the outside.

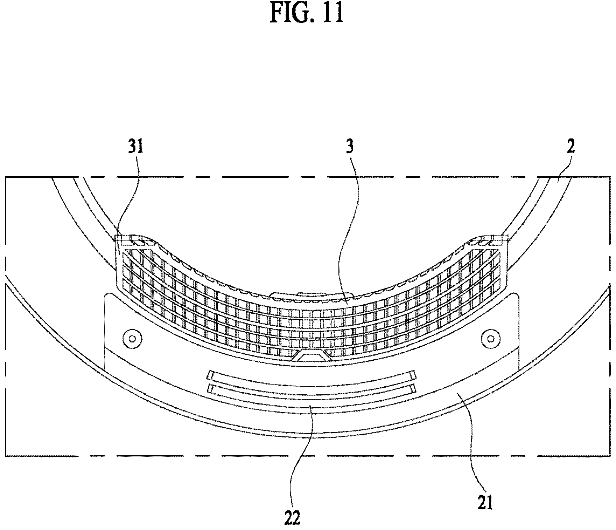

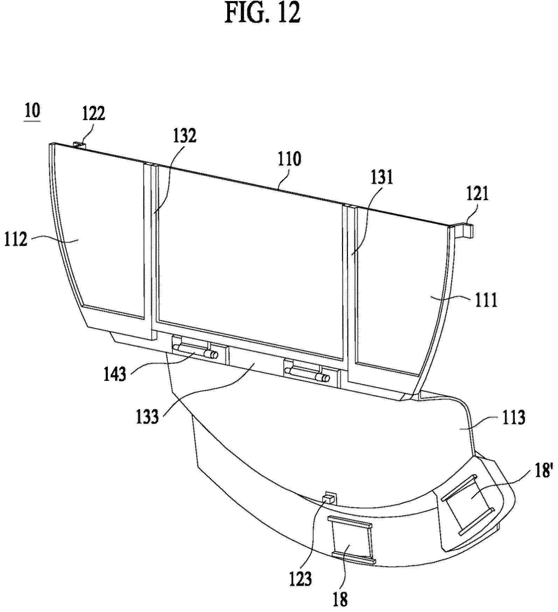

FIG. 11 illustrates the inside 21 of the opening part of the drying apparatus 1 according to an example embodiment of the present disclosure, and FIG. 12 is a perspective view of another dehumidifying kit 10 according to an example embodiment.

The arrangement of the electrodes 22 may be different depending on the drying apparatus 1, and the dehumidifying kit 10 needs to be constructed corresponding to an arrangement of the electrodes 22.

Unlike the electrodes 22 illustrated in FIG. 10, the electrodes 22 illustrated in FIG. 11 are located near the center of the inside 21 of the opening part. Corresponding to the configuration, the current carrying part may be removably assembled on the partition wall. An example of such an assemblable current carrying part 18' is illustrated in FIG. 12. For the dehumidifying kit 10 illustrated in FIG. 12, the current carrying part 18 near the center of the rear panel 113 may contact the electrodes 22 of the drying apparatus 1 illustrated in FIG. 11, but cannot contact the electrodes 22 of the drying apparatus 1 illustrated in FIG. 10. Therefore, the dehumidifying kit 10 may combine the prefabricated current carrying part 18' with the partition wall or the rear panel 113. The current carrying part 18', the prefabricated current carrying part 18' may also contact the electrodes 22 of the drying apparatus 1 illustrated in FIG. 10 to electrically connect the electrodes 22. Therefore, the provision of the prefabricated current carrying part 18' has the advantage of allowing the dehumidifying kit 10 to be applied to more diverse types of drying apparatus 1.

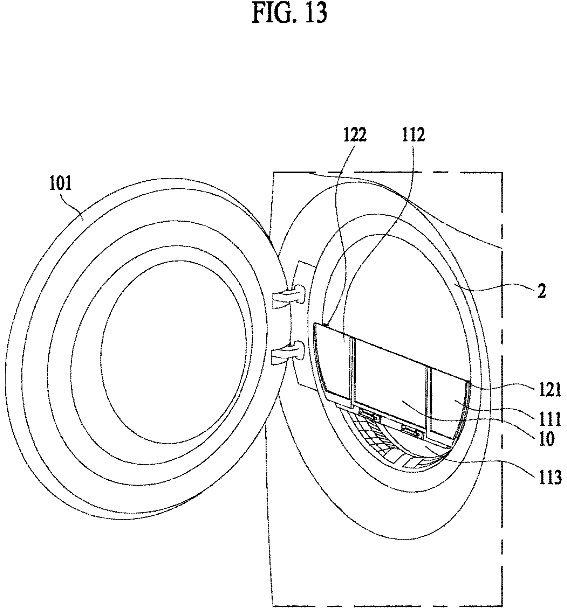

FIGS. 12 and 13 illustrate another dehumidifying kit 10 according to an example embodiment of the present disclosure. In an example embodiment, the fixing part may include the first supporting panel fixing part 121 and the second supporting panel fixing part 122. The first supporting panel fixing part 121 is provided on the first supporting panel 111 so that the first supporting panel 111 may be fixed to one side of the opening part 2 when the dehumidifying kit 10 is installed, and the second supporting panel fixing part 122 is provided on the second supporting panel 112 so that the second supporting panel 112 may be fixed to the other side of the opening part 2 when the dehumidifying kit 10 is installed. Unlike what is illustrated in FIGS. 1 to 5, there is the advantage that since the dehumidifying kit 10 does not protrude or protrudes less than the opening part 2 of the drying apparatus 1, it is possible to prevent the drying apparatus 1 from being separated from the drying apparatus 1 or damaged by accidently hitting the closed drying apparatus 1.

The drying apparatus 1 may include a separate control module to control the dehumidifying mode. The control module may include memory and one or more processors. Additionally, the control module may include other devices that may be connected to the control module through one or more ports (for example, a universal serial bus (USB), a headphone jack, a lightning connector and a thunderbolt connector). A device connectable to the control module may include a plurality of ports configured to receive fiber optic connectors. The configuration of the control module shown is intended only as a specific example for illustrating preferred example embodiments of the device. In the illustrated control module, only elements related to the example embodiments are illustrated. Therefore, it is apparent to those skilled in the art that other general-purpose elements may be included in addition to the elements illustrated in the control module.

A processor may be used to cause a control module to provide the operations or functions of any example embodiment described in the disclosure. For example, by executing programs stored in the memory within the control module, the processor controls the control module overall. The processor may be implemented as a central processing unit (CPU), a graphics processing unit (GPU), an application processor (AP) and so on provided within the control module, but is not limited thereto.

The memory is hardware that stores various data processed within the control module, and the memory may store data processed and data to be processed through the processor in the control module. Further, the memory may store basic programming and data structures that can provide the functionality of at least one example embodiment of the present disclosure as well as applications (programs, code modules and instructions), drivers and so on that can provide the functions of example embodiments of the present disclosure. The memory may include random access memory (RAM), such as dynamic random access memory (DRAM), static random access memory (SRAM), read-only memory (ROM), electrically erasable programmable read-only memory (EEPROM), CD-ROM, Blu-ray or other optical disk storage, hard disk drive (HDD), solid state drive (SSD) or flash memory.

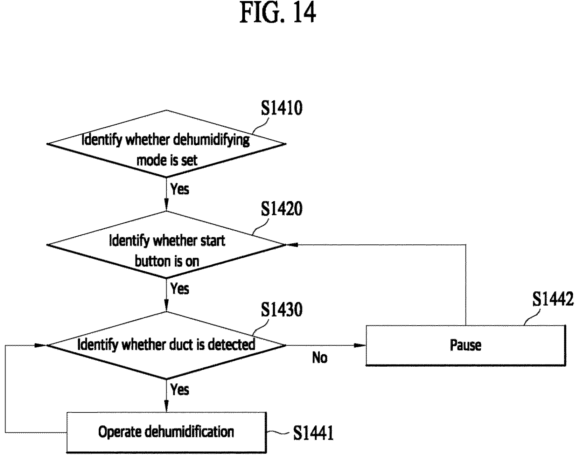

In an example embodiment, the control module of the drying apparatus 1 identifies a dehumidification start command, when the command is identified, identifies whether a dehumidifying kit is installed through a current carrying part provided in the dehumidifying kit, when the dehumidifying kit is installed as a result of the identification, performs dehumidification operation, and when the dehumidifying kit is not installed as a result of the identification, pauses the dehumidification operation and identifies the dehumidification start command. The process is explained operation by operation in detail with reference to FIG. 14.

FIG. 14 illustrates a method of operating the dehumidifying mode of the drying apparatus 1 according to an example embodiment. In operation S 1410, the control module may identify whether the dehumidifying mode of the drying apparatus 1 is set. For example, the control module may identify that the dehumidifying mode is set by identifying an input of the user to set the drying apparatus 1 to dehumidifying mode through the user interface of the drying apparatus 1.

In operation S1420, the control module may identify whether there is a user input or a dehumidification start command that causes the drying apparatus 1 to start the dehumidification operation. For example, the control module may identify whether there is a user input or dehumidification start command that causes the drying apparatus 1 to start the dehumidification operation by identifying a user input through a user interface of the drying apparatus 1. Specifically, by having a separate start button, the user interface of the drying apparatus 1 allows the control module to identify the input of the user when the user presses the start button.

In operation S1430, when the dehumidification start command is identified, the control module may identify whether the dehumidifying kit 10 according to an example embodiment is installed through the current carrying part provided in the dehumidifying kit 10. As described with respect to FIGS. 10 and 11, the current carrying part 18 of the dehumidifying kit 10 may control all of the plurality of electrodes 22 provided in the drying apparatus 1, thereby electrically connecting the plurality of electrodes 22. The control module may identify whether the plurality of electrodes 22 are electrically connected to each other. If the plurality of electrodes 22 are electrically connected to each other, it may be identified that the dehumidifying kit 10 is installed in the drying apparatus 1.

In operation S1441, if it is identified that the dehumidifying kit 10 is installed in the drying apparatus 1, the control module may start the dehumidification operation of the drying apparatus 1. During the dehumidification operation of the drying apparatus 1, according to operation S1430 again, the control module may identify whether the dehumidifying kit 10 according to an example embodiment is installed through the current carrying part provided in the dehumidifying kit 10. This identification may be performed periodically or aperiodically during the dehumidification operation of the drying apparatus 1. There is the advantage that, in conjunction with operation S1440 to be described later, when the dehumidifying kit 10 is separated while operating in dehumidifying mode, the dehumidification operation of the drying apparatus 1 may be temporarily stopped to prevent injury to the user.

If the dehumidifying kit 10 is separated from the drying apparatus 1 during the dehumidification operation, if the dehumidification operation is resumed simply by identifying whether the plurality of electrodes 22 are electrically connected to each other, when the user simply touches the plurality of electrodes 22, the dehumidification operation will resume, which may result in injury to the user. In order to prevent such a situation, in operation S1442, if it is identified that the dehumidifying kit 10 is not installed in the drying apparatus 1, the control module may temporarily stop the operation of the drying apparatus 1 and return to operation S 1420 to identify whether there is a user input or a dehumidification start command that causes the drying apparatus 1 to start the dehumidification operation. According thereto, even if the user accidentally touches the plurality of electrodes 22, unless the dehumidification operation start button of the drying apparatus 1 is pressed, the dehumidification operation cannot be resumed, preventing injury to the user.

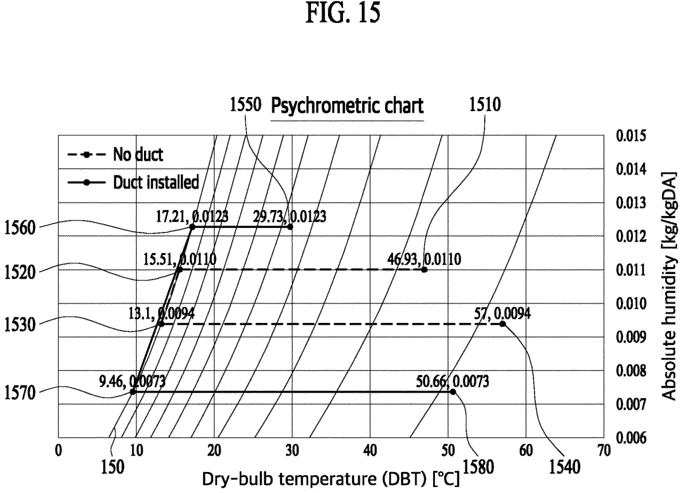

FIG. 15 illustrates a psychrometric chart in which compared are the external air dehumidification performance of a drying apparatus installed with a dehumidifying kit according to an example embodiment, which dehumidifies external air of the same dry-bulb temperature (DBT) and absolute humidity, and the external air dehumidification performance of the same drying apparatus without installing the dehumidifying kit according to an example embodiment.

A first point 1510, a second point 1520, a third point 1530 and a fourth point 1540 in the order show the process of changing the DBT and absolute humidity of air passing through the drying path of a drying apparatus without a dehumidifying kit installed in order. A fifth point 1550, a sixth point 1560, a seventh point 1570 and an eighth point 1580 show the process of changing the DBT and absolute humidity of the air passing through the drying path of the drying apparatus with the dehumidifying kit installed.

The first point 1510 and the fifth point 1550 represent the DBT and absolute humidity of the air before passing through the evaporator of the drying apparatus. Even though the external air of each drying apparatus has the same temperature and humidity, the DBT of the fifth point 1550 is lower than the DBT of the first point 1510, and the absolute humidity of the fifth point 1550 is higher than the absolute humidity of the first point 1510. As explained in FIGS. 1 to 5, this is because that when the dehumidifying kit is installed, unlike when the dehumidifying kit is not installed, the high-temperature dry air discharged from the exhaust port does not reflow into the drying path and the evaporator through the suction port. Therefore, it can be seen that moist external air is absorbed better when the dehumidifying kit is installed than when the dehumidifying kit is not installed.

The evaporator brings cold refrigerant into contact with the sucked air, lowering the temperature of the air and condensing the water vapor in the air. In other words, as the air at the first point 1510 passes through the evaporator, its temperature drops to the second point 1520 on the saturation curve 150, and at this time, condensation of water vapor begins. As water vapor condenses, the DBT and the absolute humidity of air reach the third point 1530 along the saturation curve 150.

The condenser heats the air to a high temperature. In other words, the air at the third point 1530 that passes through the evaporator passes through the condenser and is heated to the fourth point 1540, and then the air is discharged out of the drying path through the exhaust port. The process of external air passing through the evaporator and the condenser of the drying path is equally applied to the air at the fifth point 1550, the sixth point 1560, the seventh point 1570 and the eighth point 1580.

The dehumidifying performance of a drying apparatus may be defined as the difference in absolute humidity between the air sucked through the suction port and before passing through the evaporator and the air passed through the condenser and discharged to the exhaust port. Therefore, referring to FIG. 15, the absolute humidity difference between the eighth point 1580 and the fifth point 1550 is greater than the absolute humidity difference between the fourth point 1540 and the first point 1510, and thus it can be seen that the external air dehumidification performance of the drying apparatus installed with the dehumidifying kit according to the present disclosure is better than the external air dehumidification performance of the drying apparatus without the dehumidifying kit.

## Claims

1. A dehumidifying kit installed on a drying apparatus that operates an inside drying function when a door is closed and an outside dehumidifying function when the door is open through a suction port and an exhaust port that are provided inside,
wherein an opening part of the drying apparatus is partitioned as an opening inlet and an opening outlet, an inner space of the drying apparatus is partitioned as an external air suction flow path from the opening inlet to the suction port and a dry air discharge flow path from the exhaust port to the opening outlet.

2. The dehumidifying kit of claim 1,
wherein partition of the opening part and partition of the inner space of the drying apparatus is implemented by a partition wall,
wherein the partition wall includes a guiding surface that faces a direction of the suction port of the drying apparatus and external air sucked into the opening inlet is guided by the guiding surface and sucked into the suction port.

3. The dehumidifying kit of claim 2,
wherein the partition wall includes:
a main panel;
a first supporting panel that is connected to one side end of the main panel through a first supporting panel connecting part and supports the main panel;
a second supporting panel that faces the first supporting panel and is connected to an opposite side end of the main panel through a second supporting panel connecting part to support the main panel; and
a rear panel that is connected to a rear end of the main panel through a rear panel connecting part and supports the main panel,
wherein at least one of the main panel, the first supporting panel, the second supporting panel and the rear panel forms the guiding surface.

4. The dehumidifying kit of claim 1,
further comprising a fixing part that fixes the dehumidifying kit to the drying apparatus.

5. The dehumidifying kit of claim 3,
wherein the fixing part that fixes the dehumidifying kit to the drying apparatus is included,
wherein the fixing part includes:
a first supporting panel fixing part that is provided on the first supporting panel and fixes the first supporting panel to one side of the suction port when the dehumidifying kit is installed;
a second supporting panel fixing part that is provided on the second supporting panel and fixes the second supporting panel to an opposite side of the suction port when the dehumidifying kit is installed; and
a rear panel fixing part that is provided on the rear panel and fixes the rear panel inside the opening part when the dehumidifying kit is installed.

6. The dehumidifying kit of claim 5,
wherein the first supporting panel fixing part includes a hook that fixes the first supporting panel to the one side of the suction port when the dehumidifying kit is installed, and the second supporting panel fixing part includes a hook that fixes the second supporting panel to the opposite side of the suction port when the dehumidifying kit is installed, and the rear panel fixing part includes a hook that fixes the rear panel inside the opening part when the dehumidifying kit is installed.

7. The dehumidifying kit of claim 3,
wherein the first supporting panel connecting part includes a first lateral hinge,
the second supporting panel connecting part includes a second lateral hinge,
the rear panel connecting part includes a rear hinge, and
when the dehumidifying kit is stored, the first supporting panel is rotated based on the first lateral hinge, the second supporting panel is rotated based on the second lateral hinge, and the rear panel is rotated based on the rear hinge in order for the first supporting panel, the second supporting panel and the rear panel to be folded toward the main panel.

8. The dehumidifying kit of claim 7,
wherein the first supporting panel
includes a first sealing tongue that is protruded from one side of the first supporting panel near the first supporting panel connecting part in a direction perpendicular to a surface of the first supporting panel, the second supporting panel
includes a second sealing tongue that is protruded from one side of the second supporting panel near the second supporting panel connecting part in a direction perpendicular to a surface of the second supporting panel, the main panel
includes a rear sealing tongue that is protruded from one side of the main panel near the rear panel connecting part in a direction perpendicular to a surface of the main panel and has an end that is bent outward parallel to the rear panel,
the main panel includes:
a first sealing groove that is provided near the first supporting panel connecting part and an end of the first sealing tongue is inserted to seal the first supporting panel connecting part; and
a second sealing groove that is provided near the second supporting panel connecting part and an end of the second sealing tongue is inserted to seal the second supporting panel connecting part, and
the rear panel
includes a rear sealing groove in which an end of the rear sealing tongue is inserted near the rear panel connecting part to seal the rear panel connecting part.

9. The dehumidifying kit of claim 7,
wherein the first supporting panel
includes a first tongue for assembly that is protruded parallel to the surface of the first supporting panel at a rear end of the first supporting panel, the second supporting panel
includes a second tongue for assembly that is protruded parallel to the surface of the second supporting panel at a rear end of the second supporting panel, and
the rear panel includes:
a first groove for assembly into which the first tongue for assembly is inserted at one side end of the rear panel; and
a second groove for assembly in which the second tongue for assembly is inserted at an opposite side end of the rear panel.

10. The dehumidifying kit of claim 1,
wherein the partition of the opening part and the partition of the inner space of the drying apparatus is implemented by the partition wall, wherein the partition wall
covers one or more electrodes provided in the drying apparatus, when the dehumidifying kit is installed.

11. The dehumidifying kit of claim 1,
further comprising a current carrying part that connects all of the plurality of electrodes provided in the drying apparatus and electrically connects the plurality of electrodes, when the dehumidifying kit is installed.

12. The dehumidifying kit of claim 11,
wherein the partition of the opening part and the partition of the inner space of the drying apparatus is implemented by the partition wall,
the current carrying part is removably assembled on the partition wall.

13. A drying apparatus configured to perform an inside drying function when
a door is closed and an outside dehumidifying function when the door is open, the apparatus comprising:
a drum that forms an inner space that accommodates materials to be dried;
a cabinet that mounts the drum and forms an opening part through which the materials to be dried are introduced into the drum;
a door that opens and closes the opening part;
a suction port that is provided inside the drying apparatus to suck humid air;
an exhaust port that is provided inside the drying apparatus to discharge dry air; and
a dehumidifying kit,
wherein the dehumidifying kit,
in a state that the door is open, the opening part is partitioned into an opening inlet and an opening outlet, and the inner space of the drying apparatus is partitioned into an external air suction flow path from the opening inlet to the suction port and a dry air discharge flow path from the exhaust port to the opening outlet.

14. The drying apparatus of claim 13, further comprising:
an evaporator and a condenser disposed on a drying path formed from the suction port to the exhaust port; and
a fan forming airflow in the drying path.

15. A method of operating a dehumidifying mode of the drying apparatus of claim 13, the method comprising:
identifying a dehumidification start command;
when the command is identified, identifying whether a dehumidifying kit is installed through a current carrying part provided in the dehumidifying kit; and
when the dehumidifying kit is installed as a result of identification, performing a dehumidification operation, and when the dehumidifying kit is not installed as a result of identification, pausing the dehumidification operation and identifying the dehumidification start command.
